# EUROPÄISCHE PATENTANMELDUNG

(11) **EP 3 291 397 A1**
(43) Veröffentlichungstag der Anmeldung: **07.03.2018**
(21) Anmeldenummer: 17001434.4
(22) Anmeldetag: 24.08.2017
(51) Int. Cl.: H02G 15/013

(54) **VORRICHTUNG ZUM BEFESTIGEN EINER LEITUNG**

(30) Priorität: 31.08.2016 DE 102016010487
(71) Anmelder: Jacob GmbH, 71394 Kernen (DE)
(72) Erfinder: SOHN, Wolfgang, 71549 Auenwald (DE)
(74) Vertreter: Jendricke, Susann

(57) **Zusammenfassung**

Es wird eine Vorrichtung zum Befestigen einer Leitung (1) in einer Durchtrittsöffnung (2) einer Gehäusewand (3) oder dergleichen, mit einem Halteteil (4), das durch die Durchtrittsöffnung (2) hindurchführbar und an der Gehäusewand (3) festlegbar ist und mit einem Dichtteil (5), das die Leitung (1) im Betriebszustand hält, abdichtet und gegen Zugbeanspruchung sichert, und dabei mit dem Halteteil (4) zusammenwirkt, welche dadurch eine zuverlässige Zugentlastung ohne Beschädigung der Leitung ermöglicht, dass der Dichtteil (5) relativ zum Halteteil (4) in Richtung der Längsachse (A) der Leitung (1) bewegbar ist und dass der Dichtteil (5) und der Halteteil (4) bei Zugbeanspruchung der montierten Leitung (1) derart zusammenwirken, dass der Dichtteil (5) gegen die Oberfläche der Leitung (1) gepresst ist.

## Beschreibung

Die vorliegende Erfindung betrifft eine Vorrichtung zum Befestigen einer Leitung in einer Durchtrittsöffnung einer Gehäusewand oder dergleichen, mit einem Halteteil, das durch die Durchtrittsöffnung hindurchführbar und an der Gehäusewand festlegbar ist und mit einem Dichtteil, das die Leitung im Betriebszustand hält, abdichtet und gegen Zugbeanspruchung sichert und dabei mit dem Halteteil zusammenwirkt.

Die zu befestigenden Leitungen können schlauchförmig sein und zum Stoff- oder Gastransport dienen oder es kann sich um elektrische Leitungen handeln, insbesondere um solche, die mehrere Kabel enthalten. Die Vorrichtungen, die die Leitungen befestigen, werden üblicherweise als Kabelverschraubung oder Schlauchverschraubung bezeichnet. Sie dienen der Befestigung der Leitungen in Durchtrittsöffnungen von Gehäusewänden von Behältern, Gehäusen, elektrischen Geräten und Einrichtungen, wie Maschinen und Schaltschränken. Häufig weisen die Kabel- oder Schlauchverschraubungen eine beträchtliche Baulänge und ca. fünf Einzelteile auf, die zu montieren sind. Die Leitung wird durch die Vorrichtung hindurchgeführt und wird durch diese gehalten, gegen Zugkräfte gesichert und entlastet sowie gegen Feuchtigkeit, Spritzwasser im Gehäuse und gegen Staub abgedichtet.

Aus dem Stand der Technik sind auch ein- oder zweiteilige Vorrichtungen bekannt, deren Herstellung kostengünstiger ist als die der mehrteiligen Kabel- oder Schlauchverschraubungen, und die ein Halteteil zur Festlegung in der Wandöffnung und ein Dichtteil zum Halten und Dichten und auch Zugentlasten der Leitung umfassen.

Aus der Druckschrift DE 2 106 947 A ist eine Kabeleinführungsschraube bekannt, deren Halteteil als Schraubkörper vorliegt und deren Dichtteil in Form einer doppelwandigen Dichtungsmembran ausgeführt ist. Die Dichtungsmembran weist einen Ringflansch auf, der mit einer Ringnut im Schraubkörper in Eingriff zu bringen ist und so plötzlich auftretenden Zugbeanspruchungen begegnet. Die doppelwandige Dichtungsmembran weist Öffnungen auf, durch die die Leitung geführt wird. Je kleiner die Löcher sind, desto länger wird eine durch die Membrane beim Hindurchschieben der Leitung ausgebildete lippenartige Ummantelung der Leitung. Die Herstellung der bekannten Kabeleinführungsschraube wird verteuert, da Ringnut und Ringflansch der beiden Bestandteile ausgebildet und montiert werden müssen. Diese Montage ist in der DE 2 106 947 A als schwierig beschrieben und bedarf der Erleichterung durch Abrundungen der Ringflanschecken. Diese Abrundungen wiederum vermindern die den Zugkräften entgegenzubringende Wirkung, so dass neben dem Herstellungs- und Montageaufwand auch die Zuverlässigkeit der bekannten Kabeleinführungsschraube fraglich ist.

Die Druckschrift DE 100 13 220 A1 zeigt eine einteilige, aus elastischem Kunststoff hergestellte Kabeldurchführung, wobei innerhalb des Montagekörpers zur Festlegung in der Wand ein Kabelfixierelement vorgesehen ist, das zueinander versetzte Reihen von radial nach innen ragenden Vorsprüngen zum Halten der Leitung aufweist. Bei der Leitungsmontage werden die Vorsprünge in axialer Richtung parallel zur Längsachse des Kabels verformt. Treten Zugkräfte entgegen der Montagerichtung auf, wirken die Vorsprünge widerhakenförmig und bieten einen erhöhten Widerstand gegen das Herausziehen des Kabels. Mit der Widerhaken-Wirkung können zwar hohe Zugentlastungskräfte aufgebracht werden, jedoch ist bei der in Rede stehenden Kabeldurchführung nachteilig, dass sich die Vorsprünge in die Außenoberfläche der Leitung eingraben und die Leitung verletzen können. Dieser Nachteil trifft auch auf den Gegenstand der Druckschrift DE 199 63 905 A1 zu, dessen Fixierelement und dessen Montagekörper derart einstückig sind, dass eine zusätzliche Aufnahmehülse vorgesehen ist, an deren Innenoberfläche die Vorsprünge angeformt sind.

Eine weitere Kabeleinführung mit Zugentlastungsmitteln ist in der Druckschrift DE 10 2007 003 752 A1 beschrieben. Dort geht es um einen Flansch, der an der Gehäusewand anliegt und an den Hinterschneidungen mit Klauen versehen ist, die sich nach der Wandmontage auf der anderen Seite der Wandöffnung erstrecken. Auch bei dieser in Rede stehenden Kabeleinführung weiten sich die Arme beim Durchführen der Leitung, wogegen sie sich beim Herausziehen der Leitung verstemmen und damit eine hohe Zugentlastungskraft erzielen sollen. Die hohen Zugentlastungskräfte sind nur dann erreichbar, wenn auch die Kräfte beim Einführen der Leitung hoch sind. Zudem muss der Flansch mit der Hinterschneidung und den Klauen aus einem Material geringer Elastizität hergestellt werden, womit in der Regel auch die Reibkräfte gegenüber der Leitung gering sind. Um dem wiederum entgegenzuwirken, weisen die Klauen eine profilierte Oberfläche auf, die an der Außenoberfläche der Leitung angreifen. Da die Hinterscheidungen die Klauen radial nach innen drücken, kann das Profil der Klauen auf die Leitungsoberfläche so einwirken, dass diese deformiert oder beschädigt wird.

Der Erfindung liegt die Aufgabe zugrunde, eine Vorrichtung der in Rede stehenden Art anzugeben, die eine zuverlässige Zugentlastung ohne Beschädigung der Leitung ermöglicht.

Die voranstehende Aufgabe wird durch die Merkmale des Patentanspruches 1 gelöst. Danach ist eine Vorrichtung der in Rede stehenden Art derart ausgestaltet, dass der Dichtteil relativ zum Halteteil in Richtung der Längsachse der Leitung bewegbar ist und dass der Dichtteil und der Halteteil bei Zugbeanspruchung der montierten Leitung derart zusammenwirken, dass der Dichtteil gegen die Oberfläche der Leitung gepresst ist.

Ausgehend vom Stand der Technik betreffend DE 2 106 947 A ist zunächst erkannt worden, dass die dortigen Membrane eine Dichtfunktion erfüllen und durch die Ringnut des Halteteils und den Ringflansch des Dichtteils ein Zusammenwirken derart realisiert wird, dass bei Zugkraftbeanspruchung der Leitung diese am Herausrutschen gehindert wird. Das Zusammenwirken wird über den Eingriff des Ringflansches in die Ringnut realisiert, die einem axialen Verschieben des Dichtteils und der Leitung eher weniger zuverlässig entgegenwirkt.

Weiter ist erkannt worden, dass es bei anderen bekannten Vorrichtungen durch Klauen und durch wie Widerhaken wirkende Vorsprünge zur Beschädigung der Leitungsoberfläche kommen kann.

Erfindungsgemäß ist erkannt worden, dass eine Beschädigung der Leitung dann ausbleibt, wenn der Dichtteil bei der Sicherung der Leitung bei Zugkraftbeaufschlagung entgegen der Montagerichtung in Kontakt mit deren Oberfläche ist und mit dem Halteteil derart zusammenwirkt, dass die Presskraft über den Dichtteil auf die Leitung ausgeübt ist.

Schließlich ist erfindungsgemäß erkannt worden, dass die Presskraftbeaufschlagung dann erhöht werden kann, wenn der Dichtteil axial bewegbar ist. Durch die axiale Bewegbarkeit und eine passende Ausgestaltung des Halteteils können radial nach innen wirkende Kräfte erzeugt werden, die das Herausrutschen der Leitung bei Zugkraftbeaufschlagung wirksam verhindern. Sobald auf die montierte Leitung, an welcher das Dichtteil bereits vorzugsweise kraftschlüssig anliegt, eine Zugkraft ausgeübt wird, wird die axiale Bewegung des Dichtteils in Gang gesetzt.

Zur Durchführung der Leitung könnte der Halteteil wie üblich eine Durchtrittsöffnung aufweisen, deren Längsachse mit der Längsachse der montierten Leitung übereinstimmt. Im Hinblick auf die Sicherung der Leitung bei Zugkraftbeaufschlagung entgegen der Montagerichtung könnte die Durchtrittsöffnung aber nicht wie üblich parallel zur Längsachse ausgerichtet sein, sondern sie könnte zumindest bereichsweise in Montagerichtung divergieren, bzw. sich entgegen der Montagerichtung verjüngen. Im Divergenzbereich der Durchtrittsöffnung könnte der Halteteil eine Anlagefläche für den Dichtteil ausbilden. Die äußere Formgebung des Halteteils könnte zylindrisch sein. Die Montagerichtung ist zum Inneren des Maschinengehäuses oder des Schaltschranks orientiert.

Der Divergenzbereich könnte glatt konisch oder segmentiert sein oder in Lamellenform ausgeführt sein. Die Aufgabe des Divergenzbereiches ist es, eine entgegen der Montagerichtung abnehmende, konvergierende Anlagefläche zu schaffen, an die sich das bei der Zugkraftbeaufschlagung entgegen der Montagerichtung ebenfalls entgegen der Montagerichtung axial bewegende Dichtteil hinein bewegt. Je intensiver sich der Dichtteil in den Startabschnitt des Divergenzbereiches hineinbewegt, desto stärker wird er verpresst und übt damit eine immer größere Anpresskraft auf die Leitung aus und verhindert so deren Herausrutschen aus der Vorrichtung.

Neben einer glatten konischen Anlagefläche des Divergenzbereiches könnte dieser auch radial und/oder koaxial segmentiert sein, so dass Aufnahmebereiche mit Anlageflächen entstehen, in die sich der Dichtteil einpasst. Des Weiteren könnten im Divergenzbereich Lamellen vorgesehen sein, die der Dichtteil während der axialen Bewegung entgegen der Montagerichtung bei Zugkraftbeaufschlagung der Leitung von außen überwinden muss. Die Divergenz oder Konvergenz der Durchtrittsöffnung des Halteteils könnte auch durch unterschiedlich große Innenlamellen oder Innensegmentierungen herbeigeführt werden, die bspw. von einer zylindrischen Matrix abragen. Derartige Widerstände sind so gestaltet, dass das Dichtteil-Material nicht beschädigt wird. Weiter könnte es vorteilhaft sein, den Divergenzbereich nicht über seinen gesamten Umfang mit Funktionsmerkmalen der Dichtteil-Verpressung auszustatten. Bspw. könnten lediglich drei Segmente vorgesehen sein. Dies würde dem Dichtteil die Möglichkeit geben, sich ungleichförmig zu deformieren, wodurch ein größerer Deformationsgrad im Bereich der drei Segmente vorliegt. Alternativ kann es vorteilhaft sein, den Divergenzbereich mit einer begrenzten Anzahl, insbesondere mit mindestens drei, Lamellen bzw. Rippen auszustatten. Als Dichtteilmaterial könnte Elastomer oder Gummi oder anderweitiger weicher Kunststoff in Betracht kommen.

Die Kontur des Divergenzbereiches könnte auch wellenförmig ausgeführt werden, wobei die Anzahl der Wellen mindestens zwei ist. Dies gibt dem Dichtteil die Möglichkeit, auch in Zwischenpositionen in Selbsthemmung zu geraten. Diese Ausführungsform wird als bevorzugt bei der Nutzung von unterschiedlichen Leitungsquerschnitten angesehen. Da sich die Kräfte beim Zurückziehen der Leitung ebenfalls wellenförmig verhalten, gibt diese Ausführung dem Anwender eine Indikation, dass die Zugentlastung "aktiviert" ist.

Die Formgebung des Divergenzbereiches könnte linear oder progressiv oder degressiv bezogen auf die Längsachse der Vorrichtung bzw. der Leitung verlaufen. Hier könnte der Divergenzbereich eine Kegelstumpfform oder eine einem Hyperboloid ähnliche Form oder eine einem Paraboloid ähnliche Form aufweisen, die sich in Montagerichtung erweiteren und entgegen der Montagerichtung verjüngen. Einem degressiven Verlauf wird der Vorzug gegeben, um bei größer werdenden Zugentlastungskräften einen immer stärker werdenden Selbsthemmungseffekt zu erzielen.

Gemäß einer bevorzugten Ausführungsform könnte der Dichtteil ringförmig sein, so dass die Leitung nach der Montage komplett vom Dichtteil umgeben ist. Die Ringöffnung des ringförmigen Dichtteils könnte geringfügig kleiner sein als der kleinste realisierbare Leitungsquerschnitt. Beim Einführen der Leitung in Montagerichtung wird der Dichtteil bezogen auf die Längsachse radial nach außen verdrängt, wobei es zu einer haltenden Anlage der Leitung an das die Ringöffnung begrenzende Material des Dichtteils kommt. Alternativ könnten auch mehrere Dichtteile zum Einsatz kommen.

Der Dichtteil könnte beispielsweise als Dichtring vorliegen, dessen Querschnitt eine kreisförmige Formgebung aufweist. Bei einem kreisförmigen Querschnitt des Dichtteils ist es funktionsbegünstigend, dass der Dichtteil beim Zurückziehen der Leitung zunächst auf der Leitung abrollt, sobald er den Divergenzbereich kontaktiert. Damit rollt er weiter in den sich verjüngenden Abschnitt des Divergenzbereiches hinein und erhöht seine Zugentlastungskräfte.

Alternativ könnte die Formgebung des Dichtteils auch in Montagerichtung divergieren, wobei sich der als Anlagefläche zur Leitung dienende Bereich parallel zur Längsachse der Leitung erstreckt (innen zylindrisch) und der gegenüberliegende Bereich (außen konisch) mit der divergierenden Anlagefläche des Divergenzbereiches des Halteteils korrespondiert. Mit dieser Formgebung des Dichtteils können auf kleinem Weg hohe Zugentlastungskräfte aufgebaut werden.

Eine andere Formgebungsvariante des Dichtteils könnte vorsehen, die als Kontaktfläche zur Leitung bestimmte Oberfläche anfänglich mit größeren Abmessungen zu versehen als die als Kontaktfläche zum Divergenzbereich des Halteteils bestimmte Oberfläche. Dies ermöglicht, dass der Dichtteil am Divergenzbereich noch gleiten kann, wogegen er an der Leitung anhaftet und damit weiter in den sich verjüngenden Abschnitt des Divergenzbereiches hineinrutscht. Um diesen Effekt zu erreichen, könnte die Kontaktfläche des Dichtteils zum Divergenzbereich des Halteteils leicht konvex, konkav oder mit einem gering anderen Winkel als der Divergenzbereich gestaltet sein. Ebenso könnte es vorteilhaft sein, in Achsrichtung eine wellenförmige Kontur einzubringen .

Die wesentlichen Bestandteile der erfindungsgemäßen Vorrichtung, nämlich der Halteteil und der Dichtteil, könnten als zwei Bauteile vorliegen, wobei der Dichtteil unverlierbar und in Richtung der Längsachse bewegbar innerhalb der Durchtrittsöffnung des Halteteils angeordnet ist. Dazu könnte innerhalb der Durchtrittsöffnung des Halteteils, am Endabschnitt des Divergenzbereiches eine Abdeckung vorgesehen sein, die das Herausfallen des Dichtteils verhindert, die Leitung aber durchlässt. Die Abdeckung könnte eine Durchtrittsöffnung aufweisen, die größer ist als der Leitungsquerschnitt und kleiner als der Außenquerschnitt des Dichtteils.

Die Vorrichtung könnte aber auch einstückig ausgebildet sein, wobei der Halteteil und der Dichtteil bereits während des montagelosen Herstellungsverfahrens miteinander verbunden sind. Als montageloses Herstellungsverfahren könnte das Zwei-Komponenten-Spritzgießverfahren ausgeführt werden.

Gemäß einer ersten Variante des einstückigen Ausführungsbeispiels der erfindungsgemäßen Vorrichtung könnte der Dichtteil einen Dichtabschnitt, einen Hülsenabschnitt und einen Verbindungsabschnitt zum Halteteil umfassen, wobei der Hülsenabschnitt und der Verbindungsabschnitt membranförmig ausgebildet sind. Der Verbindungsabschnitt könnte in Zwischenräume des aus einem härteren Kunststoff bestehenden Halteteils eingespritzt sein. Der Hülsenabschnitt könnte die Bewegung des Ringabschnitts in Richtung der Längsachse innerhalb der Durchtrittsöffnung des Halteteils erlauben. Bei dieser Variante ist der Dichtabschnitt über den membranförmigen Hülsenabschnitt und den membranförmigen Verbindungsabschnitt fest mit dem Halteteil verbunden.

Gemäß einer zweiten Variante des einstückigen Ausführungsbeispiels der erfindungsgemäßen Vorrichtung könnte die funktionelle Unterteilung in Dichtteil und Halteteil mittels einer Umbiegung, insbesondere um 180°, realisiert sein. Die Umbiegung könnte durch eine Membran erstellt werden. Bei Einsatz eines einzigen Materials könnte ein Elastomer eingesetzt sein. Die Umbiegung könnte einfach oder doppelt - im Sinne einer Rollfalte - ausgebildet sein.

Die Umbiegung könnte so ausgestaltet sein, dass sie sich bei Zugbelastung der Leitung entgegen der Montagerichtung entsprechend der axialen Verschiebung des Dichtteils ebenfalls entgegen der Montagerichtung verschieben bzw. abrollen könnte. Der Dichtteil der Vorrichtung würde über einen Hülsenabschnitt und einen Dichtabschnitt verfügen, wobei der Hülsenabschnitt aufgrund des Zusammenwirkens mit dem Halteteil während der Zugkraftbeaufschlagung in vorteilhafter Weise zusätzlich dichtend an der Leitungsoberfläche anliegen könnte.

Bei der einstückigen erfindungsgemäßen Vorrichtung gemäß der zweiten Variante könnte der Dichtteil im Ruhezustand außen zylindrisch und innen in Montagerichtung divergierend ausgebildet sein. Bei der Montage der Leitung dehnt sich der Dichtabschnitt und nimmt an der inneren, zur Leitung orientierten Kontaktfläche eine zylindrische Form an, wohingegen sich dann außen, an der zum Divergenzbereich des Halteteils orientierten Kontaktfläche eine zum Divergenzbereich parallele, in Montagerichtung ebenfalls divergierende Geometrie ausbildet.

Bei der in Rede stehenden zweiten Variante des einstückigen Ausführungsbeispiels könnte der Halteteil ebenfalls aus einem elastomeren Werkstoff bestehen und damit nur begrenzt eine Gegenkraft ausbilden. In diesem Zusammenhang ist es vorteilhaft, gerade den Startbereich der Divergenz, wo im Falle der Zugbelastung die größten Kräfte auftreten und der Dichtbereich dort zusammengepresst ist, in die Gehäusewandebene zu legen und die Steifigkeit des Gehäuses für den Aufbau der Gegenkraft mit zu nutzen. Im Gegenzug verstärkt sich dann ebenso der Sitz des Halteteils in der Gehäusewand.

Die Ausbildung des Dichtteils der einstückigen erfindungsgemäßen Vorrichtung gemäß der zweiten Variante mit einer außen zylindrischen und innen im Ruhezustand in Montagerichtung divergierenden Ausbildung könnte auch im Hinblick auf eine vorteilhafte Herstellung bevorzugt werden. Gerade die zylindrische Ausbildung an der Außenseite des Dichtteils und der Divergenzbereich des Halteteils erleichtern die Herstellung der Vorrichtung.

Vorrichtungen mit einem Innenteil (Dichtteil) und einem Außenteil (Halteteil), die einen Abstand voneinander aufweisen und durch einen Steg verbunden sind, werden in der Regel durch ein Spritzgießverfahren hergestellt. Hierzu ist ein Werkzeug bzw. eine Form erforderlich, die im Wesentlichen aus Matrize und Kern besteht. Matrize und Kern bilden gemeinsam den mit einem plastifizierten Kunststoff zu befüllenden Hohlraum. Erstrecken sich das Innen- und das Außenteil parallel zueinander, ist der Abstand meist so gering, dass der den Abstand zwischen Innen- und Außenteil der Vorrichtung bildende Kernabschnitt der Form eine geringe Stabilität aufweist und dem Verschleiß wenig entgegenzusetzen hat. Der abstandbildende Kernabschnitt ist empfindlich und bricht schnell aus. Zudem ist wegen der geringen Dimensionierung des abstandbildenden Kernabschnitts kein aktives Kühlen während der Formgebung möglich. Erst nach der Formgebung erfolgt die Kühlung, was zu langen Herstellungszeiten und damit zur Erhöhung der Herstellungskosten führt. Durch den zueinander abgewinkelten Verlauf der Außenfläche des Dichtteils gegenüber dem Divergenzbereich des Halteteils, kann der Herstellungsvorgang verkürzt und damit kostengünstiger gestaltet werden. Einerseits kann ein größerer, materialstärkerer und damit stabilerer abstandgebender Kernabschnitt der Form mit erhöhtem Verschleißwiderstand eingesetzt werden. Andererseits kann auch die Kühlsituation am abstanderzeugenden Kernabschnitt in den Formgebungsprozess integriert werden. Die bisher nachgeschaltete Abkühlphase gerät in Fortfall. Ein weiterer wesentlicher Vorteil besteht bei der Herstellung darin, dass Matrize und Kern frei von Hinterschneidungen sind, was eine schnellere und kostengünstigere Entformung der einstückigen erfindungsgemäßen Vorrichtung erlaubt.

Im Hinblick auf das Material könnte bei einer zweistückigen erfindungsgemäßen Vorrichtung ein harter Kunststoff oder Metall für das Halteteil und ein Elastomer für den Dichtteil gewählt werden.

Bei einer einstückigen erfindungsgemäßen Vorrichtung gemäß der ersten Variante mit Dichtring,- Hülsen- und Verbindungsabschnitt könnte der Halteteil aus einem biegesteifen Kunststoff bestehen, während der Dichtteil aus Gummi, Elastomer, Silikon bestehen könnte.

Bei einer einstückigen erfindungsgemäßen Vorrichtung gemäß der zweiten Variante wobei Halte- und Dichtteil durch eine Umbiegung oder Rollfalte funktionell unterteilt sind, könnte ein einheitliches Material, insbesondere ein Elastomer, eingesetzt sein.

Die erfindungsgemäße Vorrichtung könnte dann ohne weitere Abdichtmaßnahmen auskommen, wenn der Dichtteil die Abdichtung zwischen der Leitung und dem Halteteil übernimmt. Dies setzt voraus, dass der Anwender unmittelbar nach dem Durchführen der Leitung die Zugentlastung durch Zurückziehen der Leitung entgegen der Montagerichtung aktiviert.

Gemäß einer weiteren Ausgestaltung der erfindungsgemäßen Vorrichtung könnten Sicherungsmaßnahmen getroffen werden, um den Dichtbauteil in einer Position zu fixieren. Dies könnte gerade dann praktiziert werden, wenn sich der Dichtbauteil während der Zugkraftbeaufschlagung der Leitung bis zum verjüngten Startbereich des Divergenzbereiches bewegt hat und dort der größten und wirksamsten Presskraftbeaufschlagung unterliegt und somit die Leitung besonders gut hält. Hierzu konnte bspw. eine Verriegelungsklammer aus Stahl oder Edelstahl eingesetzt werden, die das Halteteil durchgreift und an der der Gehäusewand abgewandten Seite des Dichtteils zur Anlage kommt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von vier Ausführungsbeispielen der Erfindung anhand der Zeichnung zu verweisen. In Verbindung mit der Erläuterung des angeführten Ausführungsbeispiels der Erfindung werden auch im Allgemeinen bevorzugte Ausgestaltungen und Weiterbildungen der Lehre erläutert. In der Zeichnung zeigen
- Fig. 1: in schematischer Darstellung einen Längsschnitt durch die bereits an der Gehäusewand festgelegten erfindungsgemäßen Vorrichtung im Zusammenbau gemäß einem ersten Ausführungsbeispiel im Ruhezustand,
- Fig. 2: in schematischer Darstellung den Gegenstand aus Fig. 1 im Be-triebszustand mit montierter Leitung,
- Fig. 3: in schematischer Darstellung den Gegenstand aus Fig. 2 im Be-triebszustand mit montierter Leitung unter Einwirkung von Zugkräften auf die Leitung,
- Fig. 4: in schematischer Darstellung einen Längsschnitt durch die bereits an der Gehäusewand festgelegten erfindungsgemäße Vorrichtung im Zusammenbau gemäß einem zweiten Ausführungsbeispiel im Ruhezustand,
- Fig. 5: in schematischer Darstellung einen Längsschnitt durch die bereits An der Gehäusewand festgelegten erfindungsgemäße Vorrichtung Im Zusammenbau gemäß einem dritten Ausführungsbeispiel im Ruhezustand,
- Fig. 6A: in schematischer, perspektivischer Darstellung, den Gegenstand aus Fig. 5 im Betriebszustand mit montierter Leitung unter Einwirkung von Zugkräften auf die Leitung und mit Verriegelungsklam-mer,
- Fig. 6B: eine Draufsicht auf ein Detail, vergrößert, aus Fig. 5, betreffend die Verrieglungsklammer,
- Fig. 7: in schematischer Darstellung einen Längsschnitt durch die bereits an der Gehäusewand festgelegten erfindungsgemäße Vorrichtung im Zusammenbau gemäß einem vierten Ausführungsbeispiel im Ruhezustand und
- Fig. 8: in schematischer Darstellung den Gegenstand aus Fig. 7 im Be-Triebs zustand mit montierter Leitung unter Einwirkung von Zug-kräften auf die Leitung.

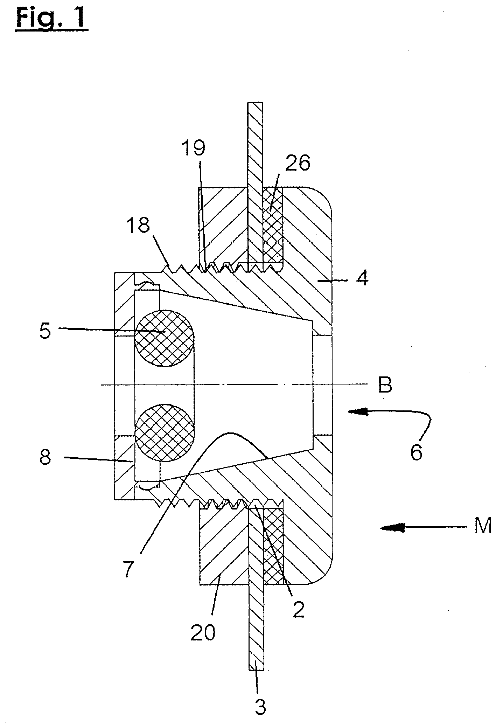

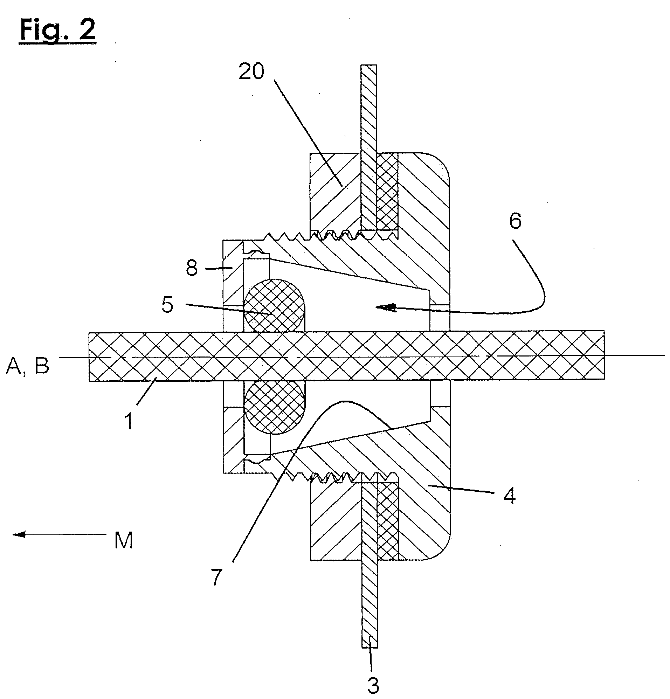

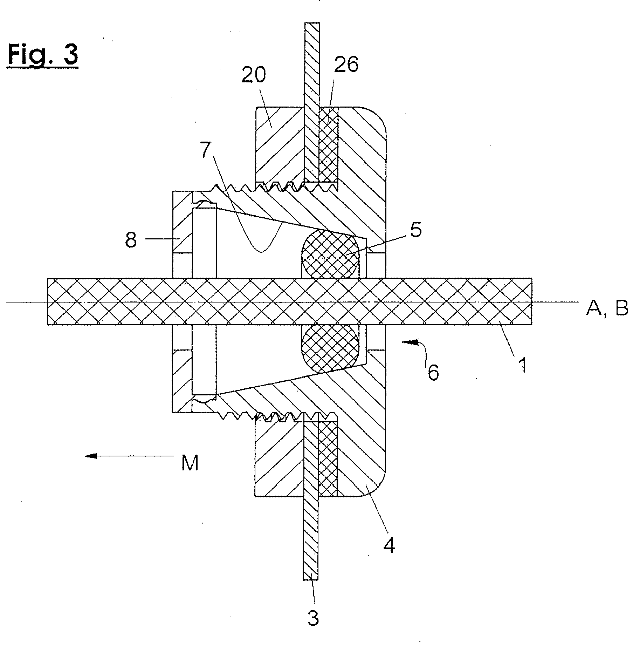

Die Figuren 1 bis 8 zeigen eine Vorrichtung zum Befestigen einer Leitung 1 in einer Durchtrittsöffnung 2 einer Gehäusewand 3.

Die Vorrichtung umfasst ein flanschförmiges Halteteil 4, das durch die Durchtrittsöffnung 2 der Gehäusewand 3 hindurchgeführt und festgelegt ist. Des Weiteren umfasst die Vorrichtung ein Dichtteil 5, das die Leitung 1 im Betriebszustand hält, abdichtet und gegen Zugbeanspruchung sichert und dabei mit dem Halteteil 4 zusammenwirkt.

Der Dichtteil 5 ist relativ zum Halteteil 4 in Richtung der Längsachse A der Leitung 1 bewegbar und wirkt mit dem Halteteil 4 bei Zugbeanspruchung der montierten Leitung 1 entgegen der Montagerichtung M derart zusammen, dass der Dichtteil 5 gegen die Oberfläche der Leitung 1 gepresst ist. Je weiter sich der Dichtteil 5 dabei in den Startbereich des Divergenzbereiches 7 bewegt, desto größer werden die Presskräfte und damit die Wirksamkeit der Zugentlastung.

Der Halteteil 4 ist hohlzylindrisch und weist ebenfalls eine Durchtrittsöffnung 6 auf, deren Längsachse B mit der Längsachse A der montierten Leitung 1 übereinstimmt. Die Durchtrittsöffnung 6 divergiert bezüglich der Figuren 1 bis 5 bereichsweise in Montagerichtung M und bildet im Divergenzbereich 7 eine Anlagefläche für den Dichtteil 5 aus.

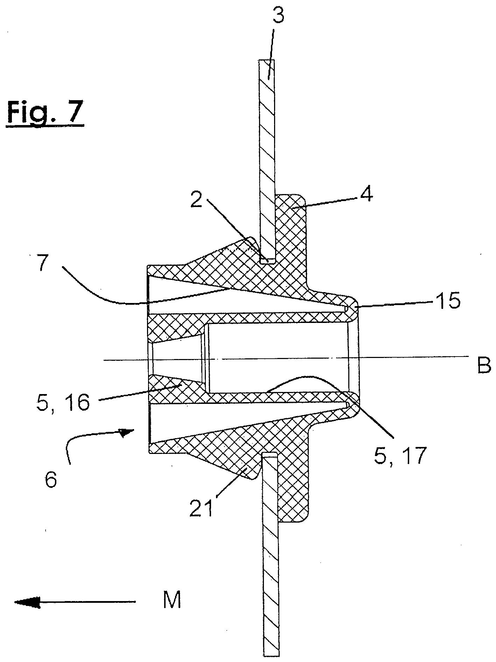

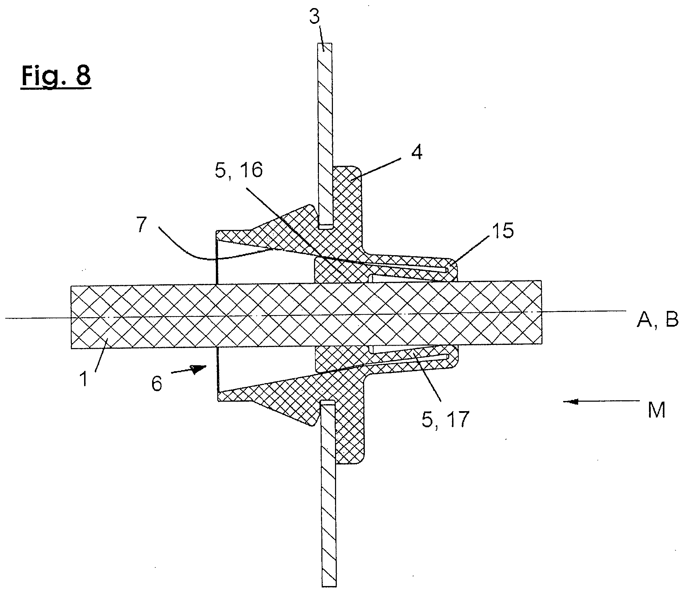

Bei dem vierten Ausführungsbeispiel gemäß den Fig. 7 und 8 divergiert die Durchtrittsöffnung 6 komplett. Es handelt sich dort um eine einstückige, materialgleiche Bauform mit über eine Umbiegung 15 verbundenen Innen- und Außenteil. Die äußere Formgebung des Halteteils 4 erstreckt sich weitgehend parallel zur Längsachse A, B, während die innere Formgebung des Halteteils 4 im Divergenzbereich 7 abgewinkelt zur Längsachse A, B verläuft.

Die Montagerichtung M beinhaltet die Montage der Leitung 1 von der Außenseite der Gehäusewand 3 in das Innere eines hier nicht dargestellten Maschinengehäuses.

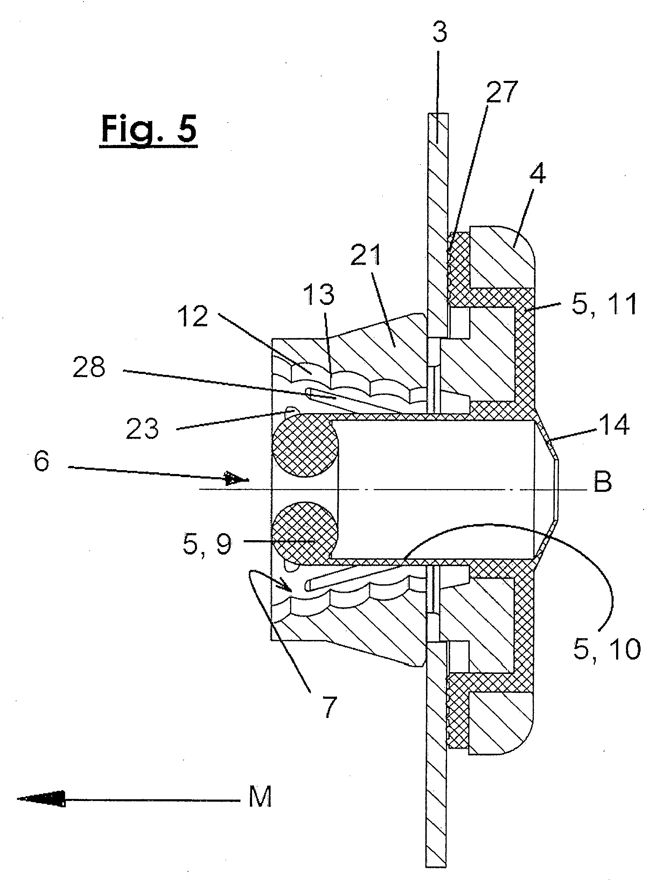

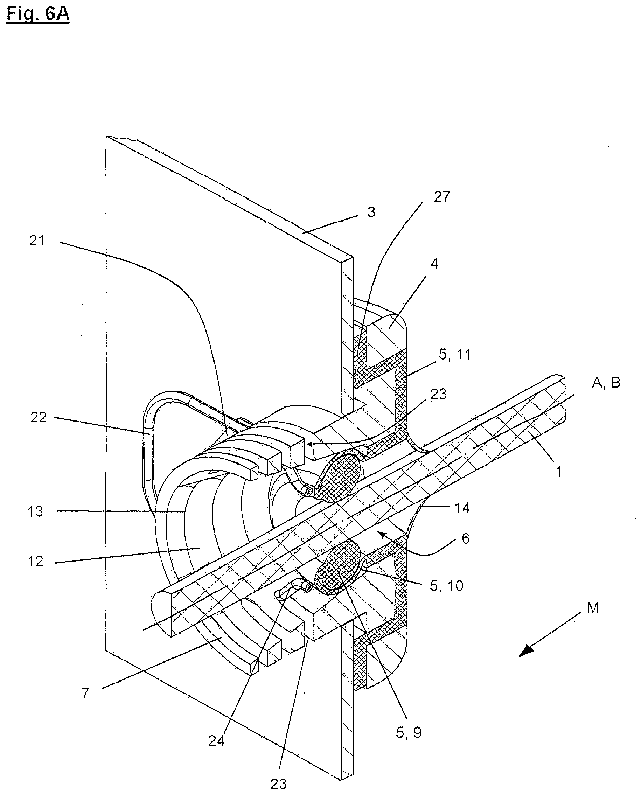

Die Divergenzbereiche 7 aller Ausführungsbeispiele erstrecken sich linear zur Längsachse A, B. Der Divergenzbereich 7 ist gemäß den Fig. 1 bis 4 sowie 7 und 8 glatt konisch ausgebildet. Das dritte Ausführungsbeispiel zeigt in den Fig. 5 und 6A eine segmentierte Ausgestaltung des Divergenzbereiches 7.

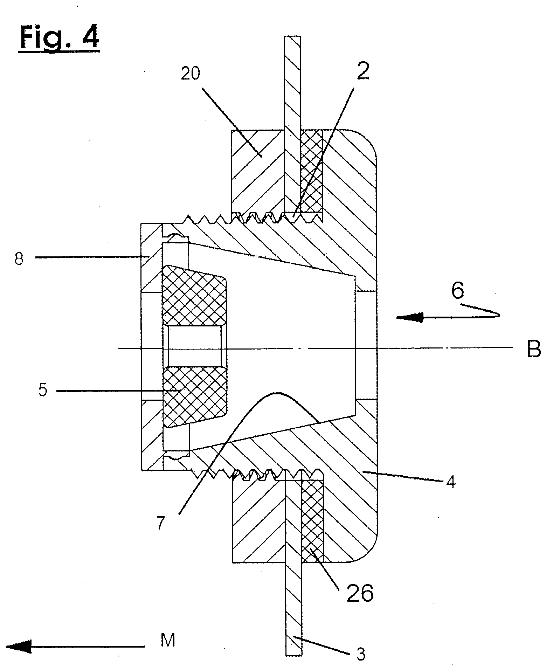

Bei allen Ausführungsbeispielen ist der Dichtteil 5 ringförmig ausgestaltet. Die Fig. 1 bis 3 zeigen ein Dichtteil 5 in Form eines Dichtrings, der im Querschnitt kreisförmig ist. Die Fig. 4 zeigt ein Dichtteil 5 in Form eines Dichtrings, der im Querschnitt ein Viereck mit abgerundeten Ecken ausbildet und dessen Außenfläche eine in Montagerichtung M divergierende Formgebung aufweist, die insbesondere mit dem Divergenzbereich 7 des Halteteils 4 korrespondiert.

Bei dem ersten und zweiten Ausführungsbeispiel gemäß den Fig. 1 bis 4 liegen der Halteteil 4 und der Dichtteil 5 in Form von zwei separaten Bauteilen vor. Der Dichtteil 5 ist unverlierbar und in Richtung der Längsachse A, B bewegbar innerhalb der Durchtrittsöffnung 6 des Halteteils 4 angeordnet. Zur Herstellung der Unverlierbarkeit ist am Halteteil 4 eine Abdeckung 8 angeordnet, die ihrerseits eine nicht näher bezeichnete Durchtrittsöffnung für die Leitung 1 aufweist, aber ein Herausfallen des Dichtteils 5 verhindert. Die nicht näher bezeichnete Durchtrittsöffnung der Abdeckung 8 weist hierzu Abmessungen auf, die die des Dichtteils 5 unterschreiten. In den vorliegenden Ausführungsbeispielen gemäß den Fig. 1 bis 4 ist die Abdeckung 8 über nicht näher bezeichnete Rastmittel am Halteteil 4, konkret am querschnittsbreiteren Ende des Divergenzbereiches7, verrastet.

Bei dem dritten und vierten Ausführungsbeispiel gemäß den Fig. 5 bis 8 liegen der Halteteil 4 und der Dichtteil 5 in Form eines einzigen Bauteils vor.

Der Dichtteil 5 des in Fig. 5 gezeigten dritten Ausführungsbeispiels umfasst einen Dichtabschnitt 9, einen Hülsenabschnitt 10 und einen Verbindungsabschnitt 11 zum Halteteil 4. Der Hülsenabschnitt 10 und der Verbindungsabschnitt 11 sind membranförmig ausgebildet, wobei der Hülsenabschnitt 10 eine geringere Materialstärke aufweist als der Verbindungsabschnitt 11 des Dichtteils 5. Der Dichtabschnitt 9 weist ebenfalls einen kreisförmigen Querschnitt auf. Der Hülsenabschnitt 10 erlaubt die Bewegung des Dichtabschnitts 9 in Richtung der Längsachse A, B innerhalb der Durchtrittsöffnung 6 des Halteteils 4. Der segmentierte Divergenzbereich 7 umfasst Stufensegmente 12, die als nach außen konvex gebogene Ausnehmungen ausgebildet sind, so dass sich der Dichtabschnitt 9 bei der Zugbeanspruchung der Leitung 1 entgegen der Montagerichtung M in diese Ausnehmungen einpassen kann. An der Verbindungsstelle 13 zwischen den Stufensegmenten 12 entsteht ein zusätzlicher Widerstand 13, der das Halten der Leitung 1 unterstützt. Bei dem dritten Ausführungsbeispiel besteht der Halteteil 4 aus einem anderen, härteren Material als der Dichtteil 5. Der Verbindungsteil 11 erstreckt sich zwischen nicht näher bezeichneten Abschnitten des Halteteils 4 und umfasst außenseitig eine Dichtlippe 14 an der Außenseite der Gehäusewand 3. Die Vorrichtung gemäß dem dritten Ausführungsbeispiel ist im Zwei-Komponenten-Spritzgussverfahren hergestellt. Der Dichtteil 5 besteht aus Elastomer mit unterschiedlichen Materialdicken. Der Verbindungsabschnitt 11 bildet eine Dichtung 27 mit umlaufenden Dichtverdickungen zur Anlage an der Gehäusewand 3 sowie die Dichtlippen 14 an der Durchtrittsöffnung 6 des Halteteils 4, quasi am Eingang für die Leitung 1, aus.

Bei dem in den Fig. 7 und 8 gezeigten vierten Ausführungsbeispiel bestehen der Halteteil 4 und der Dichtteil 5 aus einem einheitlichen Material. Die Unterteilung der Vorrichtung in Dichtteil 5 und Halteteil 4 ist mittels einer Umbiegung 15 in Form eine Rollfalte 15 realisiert. Die Umbiegung 15 / Rollfalte 15 rollt sich bei Zugbelastung der Leitung 1 entgegen der Montagerichtung M entsprechend der axialen Bewegung des Dichtteils 5 ebenfalls entgegen der Montagerichtung M ab. Der Aufbau des Dichtteils 5 gemäß dem vierten Ausführungsbeispiel umfasst einen Dichtabschnitt 16 und einen Hülsenabschnitt 17. Wirken Zugkräfte entgegen der Montagerichtung M auf die Leitung 1 ein, so wird der Dichtteil 5 axial verschoben. Dabei wird der Dichtabschnitt 16 durch den Divergenzabschnitt 7 gegen die Leitung 1 gepresst, der Hülsenabschnitt 17 verkürzt sich und die Umbiegung 15 / Rollfalte 15 wird derart abgerollt, dass sich der Divergenzbereich 7 verlängert. Bei diesem vierten Ausführungsbeispiel ist in Fig. 8 erkennbar, dass zusätzlich zur Verpressung des Dichtabschnittes 16 auf der Leitung 1 auch die Umbiegung 15 / Rollfalte 15 dichtend an der Leitung anliegt, so dass quasi eine Doppeldichtung realisiert ist.

Die erfindungsgemäße Vorrichtung gemäß dem in den Fig. 7 und 8 gezeigten vierten Ausführungsbeispiel ist nicht nur aus einem einheitlichen Material gefertigt, sondern ist auch aus einem Stück gefertigt. Bei der in Rede stehenden Innenteil-Außenteil-Variante gemäß dem vierten Ausführungsbeispiel ist eine besondere Gestaltung mit erfinderischer Qualität im Zusammenhang mit der Herstellung gewählt, wobei der Dichtteil 5 im Ruhezustand außen zylindrisch und innen in Montagerichtung M divergierend ausgebildet ist. Hierdurch kann bei der Spritzformgebung ein Werkzeugkern ohne Hinterschneidung eingesetzt werden, der größer ausgebildet und damit besser kühlbar ist, was zu einer Beschleunigung der Fabrikation führt.

Der Dichtteil 5 (Fig. 1 bis 4) bzw. dessen Dichtabschnitt 9 (Fig. 5, 6A) bzw. dessen Dichtabschnitt 16 (Fig. 7, 8) sind ringförmig ausgebildet, wobei die Ringöffnung einen geringfügig kleineren Querschnitt aufweist als die kleinste, durchführbare Leitung 1. Bei der Montage der Leitung 1 wird der Dichtteil 5 bzw. dessen Dichtabschnitte 9, 16 aufgedehnt, wodurch eine kraftschlüssige Verbindung mit der Leitung 1 entsteht. Beim Zurückziehen der Leitung 1 entgegen der Montagerichtung M kommen der Dichtteil 5 oder dessen Dichtabschnitte 9, 16 mit dem Divergenzbereich 7 des Halteteils 4 zunächst nur in Kontakt und werden bei Fortdauer der Zugbeanspruchung immer weiter entgegen der Montagerichtung M bis zum verjüngten Startbereich des Divergenzbereiches 7 bewegt und dort aufgrund der Platzverhältnisse radial zusammengepresst, wobei die Presskraft an die Leitung 1 übertragen wird und so die Zugentlastung und Sicherung der Leitung 1 erfolgt.

Zur Verankerung des Halteteils 4 in der Durchtrittsöffnung 2 der Gehäusewand 3 bezüglich der Fig. 1 bis 4 ist der Halteteil 4 mit einem Außengewinde 18 versehen, das mit dem Innengewinde 19 einer Gegenmutter 20 zusammenwirkt. Die Gegenmutter 20 wird von der Innenseite der Gehäusewand 3 auf das durch die Durchtrittsöffnung 2 ragende Halteteil 4 aufgeschraubt.

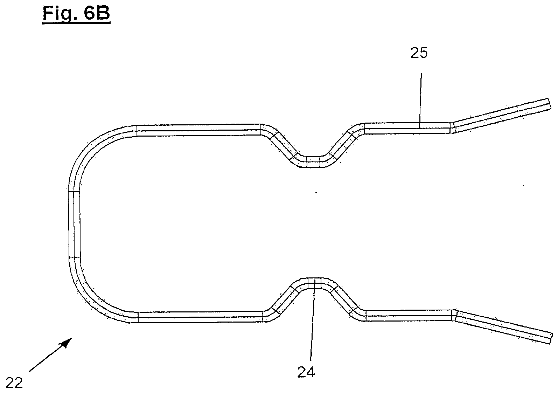

Gemäß den Fig. 5 und 6 ist die Befestigung des Halteteils 4 mittels Rasthaken 21 realisiert. Die Besonderheit hier ist, dass der Rasthaken 21 an seiner Innenseite den segmentierten Divergenzbereich 7 aufweist und somit eine Doppelfunktion erfüllt, nämlich einerseits, das Haltebauteil 4 an der Gehäusewand 3 festzulegen und andererseits, den Dichtteil 5 während seiner Bewegung entgegen der Montagerichtung M aufgrund von äußeren Zugkraftbeaufschlagungen radial nach innen, auf die Leitung 1 zu pressen sowie zusätzlich einen Widerstand 13 zu liefern und den Dichtteil 5 zu sichern. In Fig. 5 sind mit 28 Schlitzöffnungen bezeichnet, die es ermöglichen, dass die Rasthaken 21 während der Zugkraftbeaufschlagung radial nach innen einfedern bzw. auf den Dichtteil 5 einwirken können.

Eine zusätzliche Sicherungsmaßnahme stellt die Verwendung einer in den Fig. 6A und 6B gezeigten Verriegelungsklammer 22 dar, die sich in einem von mehreren paarweisen Schlitzen 23 des Halteteils 4 erstreckt. Die Verriegelungsklammer 22 dient dazu, die Zugentlastungsstellung des Dichtteils 5 zu sichern. Im vorliegenden vierten Ausführungsbeispiel ist die Verriegelungsklammer 22 in zwei in einer Ebene liegenden Schlitzen 23 angeordnet, die den geringsten Abstand zur Gehäusewand 3 aufweisen. Die Zugkraft hat dazu geführt, dass sich der Dichtabschnitt 9 des Dichtteils 5 unter Verformung der Hülse 10 des Dichtteils 5 entgegen der Montagerichtung M bewegt hat und nun am Startbereich, an der am geringsten beabstandeten Stelle des Divergenzbereiches 7 festsitzt und auf die Leitung 1 aufgepresst ist. Bei geringeren Zugkräften kommt der Dichtabschnitt 9 unter etwas geringerer Verformung der Hülse 10 in einem anderen Abstand zwischen Start und Ende des Divergenzbereichs 7 zu liegen, dann kann die Verriegelungsklammer 22 in einem anderen Schlitz 23 zum Einsatz kommen. Der Schlitz 23 verläuft koaxial zur Längsachse A, B, läuft aber nicht um, sondern ist radial begrenzt und hat auf der gegenüberliegenden Seite einen korrespondierenden Schlitz 23.

Die Verriegelungsklammer 22 ist in Fig. 6B gezeigt. Sie besteht hier aus Stahl und weist eine Einschnürung 24 und Spreizenden 25 auf. Zum Erreichen der in Fig. 6A gezeigten Verriegelungsstellung wird die Verriegelungsklammer 22 zunächst so positioniert, dass die Einschnürung 24 an dem von der Gehäusewand 3 wegweisenden Bereich des Dichtteils 5 bzw. dessen Dichtabschnitt 9 angeordnet ist. Die Spreizenden 25 weiten sich beim Auftreffen auf den Halteteil 4 etwas auf und geraten unter Spannung. Sobald die Verriegelungsklammer 22 mit ihrer Einschnürung 24 den passenden Schlitz 23 erreicht, wird diese in radialer Richtung durch die Federwirkung zusammengedrückt, so dass die Einschnürung 24 von außen kommend die Schlitze 23 durchgreift und in Anlage zum Dichtteil 5 bzw. dessen Dichtabschnitt 9 kommt und so eine wirksame Verschiebesicherung bzw. Verriegelung dafür ausbildet. Eine Bewegung des Dichtteils 5 in Montagerichtung M ist nunmehr ausgeschlossen.

Für die Abdichtung zwischen Gehäusewand 3 und Halteteil 4 ist gemäß den Figuren 1 - 4 eine Dichtung 26 vorgesehen.

Auch beim vierten Ausführungsbeispiel gemäß den Fig. 7, 8 ist die Befestigung des Haltebauteils 4 mittels Rasthaken 21 realisiert. Die Abdichtung zwischen Gehäusewand 3 und Halteteil 4 ist wird dort durch das Halteteil 4 selbst vorgenommen.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf die voranstehend erörterten Ausführungsbeispiele eingeschränkt ist.

## Patentansprüche

1. Vorrichtung zum Befestigen einer Leitung (1) in einer Durchtrittsöffnung (2) einer Gehäusewand (3) oder dergleichen, mit einem Halteteil (4), das durch die Durchtrittsöffnung (2) hindurchführbar und an der Gehäusewand (3) festlegbar ist und mit einem Dichtteil (5), das die Leitung (1) im Betriebszustand hält, abdichtet und gegen Zugbeanspruchung sichert, und dabei mit dem Halteteil (4) zusammenwirkt,
**dadurch gekennzeichnet,**
**dass** der Dichtteil (5) relativ zum Halteteil (4) in Richtung der Längsachse (A) der Leitung (1) bewegbar ist und dass der Dichtteil (5) und der Halteteil (4) bei Zug-beanspruchung der montierten Leitung (1) derart zusammenwirken, dass der Dichtteil (5) gegen die Oberfläche der Leitung (1) gepresst ist.

2. Vorrichtung nach Anspruch 1, **dadurch gekennzeichnet, dass** der Halteteil (4) eine Durchtrittsöffnung (6) aufweist, deren Längsachse (B) mit der Längsachse (A) der montierten Leitung (1) übereinstimmt und dass die Durchtrittsöffnung (6) des Halteteils (4) zumindest bereichsweise in Montagerichtung (M) divergiert und im Divergenzbereich (7) eine Anlagefläche für den Dichtteil (5) ausbildet.

3. Vorrichtung nach Anspruch 1 oder 2, **dadurch gekennzeichnet, dass** der Divergenzbereich (7) glatt konisch oder segmentiert ist oder in Lamellenform ausgeführt ist.

4. Vorrichtung nach Anspruch 2 oder 3, **dadurch gekennzeichnet, dass** sich der Divergenzbereich (7) linear, degressiv oder progressiv zur Längsachse (A, B) erstreckt.

5. Vorrichtung nach einem der Ansprüche 1 bis 4, **dadurch gekennzeichnet, dass** der Dichtteil (5) ringförmig ist.

6. Vorrichtung nach Anspruch 5, **dadurch gekennzeichnet, dass** der Querschnitt des Dichtteils (5) kreisförmig ist oder eine in Montagerichtung (M) divergierende Formgebung aufweist, die insbesondere mit dem Divergenzbereich (7) des Halteteils (4) korrespondiert.

7. Vorrichtung nach einem der Ansprüche 2 bis 6, **dadurch gekennzeichnet, dass** der Halteteil (4) und der Dichtteil (5) zwei Bauteile sind und dass der Dichtteil (5) unverlierbar und in Richtung der Längsachse (A, B) bewegbar innerhalb der Durchtrittsöffnung (6) des Halteteils (4) angeordnet ist.

8. Vorrichtung nach einem der Ansprüche 1 bis 5, **dadurch gekennzeichnet, dass** der Halteteil (4) und der Dichtteil (5) gemeinsam ein Bauteil ausbilden.

9. Vorrichtung nach Anspruch 8, **dadurch gekennzeichnet, dass** der Dichtteil (5) einen Dichtabschnitt (9), einen Hülsenabschnitt (10) und einen Verbindungsabschnitt (11) zum Halteteil (4) umfasst, wobei der Hülsenabschnitt (10) und der Verbindungsabschnitt (11) membranförmig ausgebildet sind.

10. Vorrichtung nach Anspruch 9, **dadurch gekennzeichnet, dass** der Hülsenabschnitt (10) die Bewegung des Dichtabschnitts (9) in Richtung der Längsachse (A, B) innerhalb der Durchtrittsöffnung (6) des Halteteils (4) erlaubt.

11. Vorrichtung nach Anspruch 8, **dadurch gekennzeichnet, dass** die Unterteilung der Vorrichtung in Dichtteil (5) und Halteteil (4) mittels einer Umbiegung (15) realisiert ist.

12. Vorrichtung nach Anspruch 11, **dadurch gekennzeichnet, dass** sich die Umbiegung (15) bei Zugbelastung der Leitung (1) entgegen der Montagerichtung (M) entsprechend der axialen Bewegung des Dichtteils (5) ebenfalls entgegen der Montagerichtung (M) bewegt.

13. Vorrichtung nach Anspruch 11 oder 12, **dadurch gekennzeichnet, dass** der Dichtteil (5) im Ruhezustand außen zylindrisch und innen in Montagerichtung (M) divergierend ausgebildet ist.

14. Vorrichtung nach einem der Ansprüche 8 bis 13, **dadurch gekennzeichnet, dass** der Halteteil (4) und der Dichtteil (5) aus einem einheitlichen Material oder aus verschiedenen Materialien bestehen.
